# EUROPÄISCHE PATENTSCHRIFT

(11) **EP 1 012 005 B1**
(45) Veröffentlichungstag und Bekanntmachung des Hinweises auf die Patenterteilung: **06.10.2004**
(21) Anmeldenummer: 98932115.3
(22) Anmeldetag: 04.06.1998
(51) Int. Cl.: B60R 21/26

(54) **GASGENERATOR**
GAS GENERATOR
GENERATEUR DE GAZ

(30) Priorität: 17.06.1997 DE 19725476
(43) Veröffentlichungstag der Anmeldung: 28.06.2000
(73) Patentinhaber: Dynamit Nobel GmbH Explosivstoff- und Systemtechnik, 53840 Troisdorf (DE)
(72) Erfinder: ANACKER, Lothar, D-91233 Kersbach (DE); BAYER, Karl, D-92348 Berg (DE); BERENZ, Eduard, D-90768 Fürth (DE); BREDE, Uwe, D-90765 Fürth (DE); BRETFELD, Anton, D-90765 Fürth (DE); KRAFT, Josef, D-92348 Berg (DE); SCHEIDERER, Gerrit, D-90765 Fürth (DE); WEUTER, Waldemar, D-90765 Fürth (DE); ZHANG, Jiang, D-90439 Nürnberg (DE)
(74) Vertreter: Scherzberg, Andreas, Dr.
(86) Internationale Anmeldenummer: PCT/EP1998/003336
(87) Internationale Veröffentlichungsnummer: WO 1998/057828

(56) Entgegenhaltungen:
- EP-A- 0 715 994
- DE-A- 4 002 662
- DE-A- 4 327 098
- DE-A- 19 604 392
- DE-A- 19 635 637
- FR-A- 2 134 507
- US-A- 3 905 515
- US-A- 5 226 668

## Beschreibung

Die Erfindung betrifft einen Gasgenerator, insbesondere einen Gasgenerator für Airbags.

Gasgeneratoren für Airbags weisen in einer Brennkammer eine anzündbare Zündladung und in einer Speicherkammer ein unter Druck stehendes Gas auf. Als Zündladung kann ein Gas oder ein Feststoff vorgesehen sein. Beim Auslösen des Gasgenerators zündet ein Anzündelement die Zündladung. Zum Öffnen der Speicherkammer wird durch den beim Verbrennen der Zündladung entstehenden Druck ein Stoßelement in Form eines Kolbens beschleunigt, der ein Schließelement der Speicherkammer zerstört. Somit kann das unter Druck stehende Gas in der Speicherkammer durch den geöffneten Auslaß in den Airbag ausströmen. Ferner strömen die durch das Abbrennen der Zündladung entstehenden Brenngase in die Speicherkammer, wo sie sich mit dem Druckgas vermischen. Daher strömt nach dem Zerstören des Schließelements zunächst kaltes Druckgas und anschließend ein Gemisch aus Druckgas und Brenngas in den Airbag. Somit ist verhindert, dass heiße Brenngase zuerst in den Airbag gelangen.

Der Druckverlauf bei bekannten Gasgeneratoren ist durch die Gesamtkonstruktion vorgegeben, wobei der an den Gasgenerator angeschlossene Airbag jeweils schlagartig aufgeblasen wird.

Die EP 0 715 994 A2 und DE 40 02 662 A1 zeigen einen Gasgenerator mit einer Zündladung, einem Anzündelement zum Anzünden der Zündladung, einer ein Druckgas enthaltenden Speicherkammer, die mit einem Schließelement verschlossen ist, und einem das Schließelement unter Druck zerstörenden Stoßelement.

Die gattungsgemäße DE-A-43 27 098 beschreibt einen Gasgenerator mit einer Zündladung, mindestens einem Anzündelement zum Anzünden der Zündladung, einer ein Druckgas enthaltenden Speicherkammer, die mit einem Schließelement verschlossen ist, und einem das Schließelement unter Druck zerstörenden Stoßelement, wobei als Stoßelement ein Kolben vorgesehen ist, der mit der von dem Schließelement verschlossenen Öffnung nach dem Zerstören des Schließelements einen Austrittsspalt bildet, dessen Querschnittsfläche sich in Abhängigkeit der Stellung des Kolbens verändert.

Der Erfindung liegt die Aufgabe zu Grunde, einen Gasgenerator nach dem Oberbegriff des Anspruchs 1 so zu verbessern, dass der Druckverlauf optimiert ist.

Erfindungsgemäß wird diese Aufgabe dadurch gelöst, dass zum Dämpfen der Bewegung des Kolbens ein Dämpfungselement vorgesehen ist und die Stirnseite des Kolbens gegen das verformbare Dämpfungselement stößt.

Erst durch das erfindungsgemäße Dämpfungselement ist der Druckverlauf optimiert, da er reproduzierbar bei allen Gasgeneratoren gleich ist. Ohne ein Dämpfungselement würde der Druckverlauf schwanken, was zu unerwünschten Druckspitzen führen würde.

Bei dem erfindungsgemäßen Gasgenerator ist zur Steuerung des Druckverlaufs ein Kolben vorgesehen. Der Kolben ist derart geformt, daß zwischen dem Kolben und der von dem Schließelement verschlossenen Öffnung nach dem Zerstören des Schließelements ein Austrittsspalt gebildet ist, dessen Querschnittsfläche sich in Abhängigkeit von der Stellung des Kolbens verändert. Wird beispielsweise ein sich verjüngender Kolben verwendet, so erhöht sich mit der Bewegung des Kolbens der aus dem Gasgenerator austretende Massefluß. Je nach gewünschtem Druckverlauf kann die Form des Kolbens beliebig gewählt werden.

Sowohl bei einem als Rohr als auch bei dem als erfindungsgemäßen Kolben ausgebildeten Stoßelement kann der Druckverlauf durch Vorsehen eines Dämpfungselements weiter optimiert werden. Hierbei kann das Dämpfungselement elastisch oder plastisch verformbar sein. So könnte mittels eines elastischen Dämpfungselements, wie beispielsweise einer Feder, die Auslaßöffnung in der Endphase des Aufblasens des Airbags wieder teilweise verschlossen werden, um die Belastung, des Airbags zu verringern.

Eine weitere Möglichkeit zur Veränderung des Druckverlaufs ist das Anordnen mindestens eines zusätzlichen Zündsatzes in der Zündladung. Der bzw. die zusätzlichen Zündsätze können zeitversetzt zum ersten Zündsatz, der den Gasgenerator aktiviert, gezündet werden. Das Zünden eines weiteren Zündsatzes bewirkt eine Erhöhung des Drucks in der Speicherkammer und damit eine Veränderung des Druckverlaufs im Airbag. Die Zündung weiterer Zündsätze kann auch von äußeren Parametern, wie beispielsweise der Fahrzeuggeschwindigkeit o.ä., abhängig gemacht werden.

Nachfolgend wird die Erfindung anhand bevorzugter Ausführungsformen unter Bezugnahme auf die Zeichnungen näher erläutert. Die Figuren 1 bis 8 zeigen Beispiele von Gasgeneratoren, die das Verständnis der Erfindung erleichtem sollen.

Es zeigen:
- Fig. 1: einen Längsschnitt einer ersten Ausführungsform eines Gasgenerators mit Rohr,
- Fig. 2: den in Fig. 1 dargestellten Gasgenerator nach dem Auslösen,
- Fign. 3-8: Teilschnitte unterschiedlicher Ausführungsformen von Gasgeneratoren mit Rohr vor und nach dem Auslösen und
- Fign. 9 und 10: einen Teilschnitt eines erfindungsgemäßen Gasgenerators mit Kolben vor bzw. nach dem Auslösen.

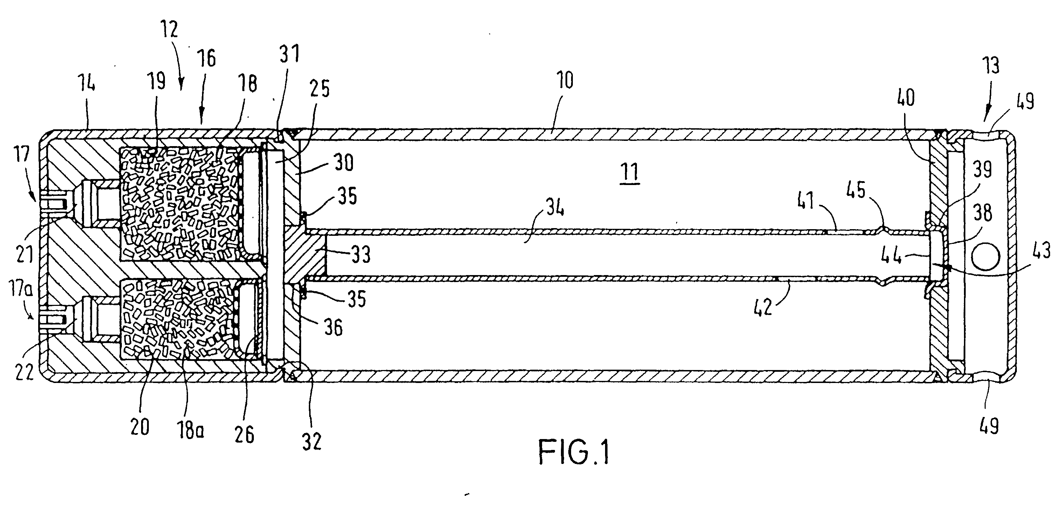

Sämtliche Ausführungsbeispiele weisen entsprechend Fig. 1 ein rohrförmiges Gehäuse 10 auf, dessen Innenraum die Speicherkammer 11 bildet. Das eine Ende des Gehäuses 10 ist mit einem Ladungskopf 12 und das gegenüberliegende Ende mit einem Diffusorkopf 13 verbunden.

In einem Gehäuse 14 des Ladungskopfs 12 ist eine Zündladung 16 angeordnet, die aus zwei Zündsätzen 17,17a besteht. Die Zündsätze 17,17a weisen jeweils eine Feststoffladung 18,18a auf, die jeweils in einer Brennkammer 19,20 angeordnet sind. Jeder Zündsatz 17,17a weist ferner ein Anzündelement 21,22 zum Zünden der Feststoffladungen 18,18a auf. Die Anzündelemente 21,22 können elektrisch von einem (nicht dargestellten) Steuerteil gezündet werden. Sie enthalten jeweils eine Anzündladung, die abbrennt und dadurch den zugehörigen Zündsatz 17,18 anzündet.

Das beim Abbrennen der Feststoffladung 18 in der Brennkammer 19 entstehende Brenngas strömt in die Zwischenkammer 25. Um ein Zünden der zweiten Feststoffladung 18a durch das in der Zwischenkammer 25 vorhandene Brenngas zu vermeiden, ist die Brennkammer 20 mit einem Deckel 26 verschlossen. Somit kann die Feststoffladung 18a von dem Anzündelement 22 zu einem späteren Zeitpunkt gezündet werden, wobei durch den in der Brennkammer 20 beim Verbrennen der Feststoffladung 18a entstehenden Druck der Deckel 26 zerstört wird.

Das Gehäuse 14 des Ladungskopfes 12 ist mit einem Dekkel 30 des Gehäuses 10 verbunden, indem eine in Richtung des Deckels 30 weisende Kante des Gehäuses 14 in eine Nut 32 des Deckels eingebördelt ist. Der Deckel 30 ist mit dem Gehäuse 10 verschweißt, um die Speicherkammer 11 dicht zu verschließen.

In dem Deckel 30 ist ein Kopfteil 33 eines als Stoßelement dienenden Rohrs 34 angeordnet. Das Kopfteil 33 ist mit dem Deckel 30 derart verbunden, daß bei ausreichendem Gasdruck in der Zwischenkammer 25 Sollbruchstellen 35 des Kopfteils 33 brechen. Dabei wird das Kopfteil 33 durch den in der Zwischenkammer 25 herrschenden Gasdruck in die Speicherkammer 11 gedrückt. Zusammen mit dem Kopfteil 33 wird das fest mit diesem verbundene Rohr 34 in Fig. 1 nach rechts bewegt und das Brenngas strömt aus der Zwischenkammer 25 in die Speicherkammer 11. Durch das in Fig. 1 rechte Ende des Rohrs 34 wird hierbei ein Schließelement 38 zerstört. Das Schließelement 38 ist in einer Öffnung 39 eines Deckels 40 des Gehäuses 10 angeordnet. Der Deckel 40 ist mit dem rohrförmigen Gehäuse 10 verschweißt, um entsprechend dem Deckel 30 die Speicherkammer 11 abzudichten.

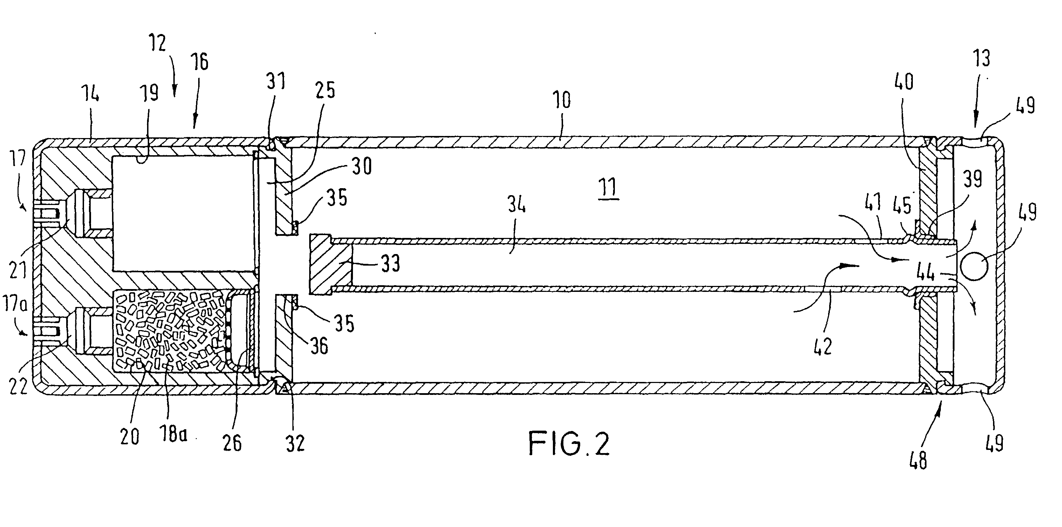

In der in den Fign. 1 und 2 dargestellten Ausführungsform weist das Rohr 34 Einlaßöffnungen 41,42 auf, die bezüglich der Rohrlängsachse zueinander versetzt angeordnet sind. Die Stirnseite 43 des Rohrs 34 ist offen und dient daher als Auslaßöffnung 44.

In der in Fig. 2 dargestellten Stellung des Rohres 34 stößt ein Anschlag 45 an die Innenseite des Deckels 40, so daß verhindert ist, daß das Rohr 34 zu weit aus dem Gehäuse 10 austritt und beispielsweise die Eintrittsöffnung 41 von dem Deckel 40 verdeckt wird. Somit strömt das Brenngas aus der Zwischenkammer 25 durch die Öffnung 36 des Deckels 30 in die Speicherkammer 11 und auf der gegenüberliegenden Seite strömt Druckgas in Richtung der Pfeile aus der Speicherkammer 11 durch die Einlaßöffnungen 41,42 in das Rohrinnere und durch die Auslaßöffnung 44 in den Diffusorkopf 13.

Der Diffusorkopf 13 ist mit dem Deckel 40 des Gehäuses mittels einer Bördelverbindung 48 fest verbunden. Das in den Diffusorkopf 13 einströmende Gas strömt durch Öffnungen 49, die am Umfang des Diffusorkopfs 13 angeordnet sind, in den nicht dargestellten Airbag.

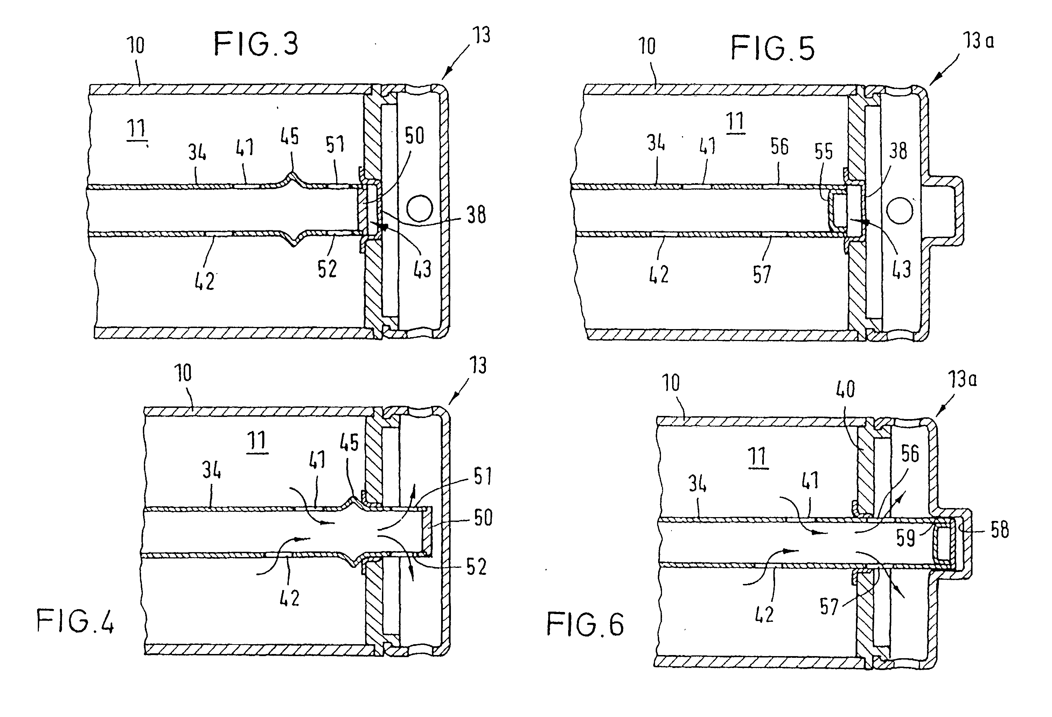

Der in den Fign. 3-10 nicht dargestellte Teil der Gasgeneratoren entspricht den Fign. 1 und 2.

In den Fign. 3 und 4 ist eine weitere Ausführungsform vor bzw. nach dem Auslösen des Gasgenerators dargestellt. Die Stirnseite 43 des Rohrs 34 ist von einem ebenen Verschluß 50 dicht verschlossen. Das Rohr 34 weist daher Auslaßöffnungen 51,52 auf, die nahe der Stirnseite 43 des Rohrs am Umfang angeordnet sind, so daß die Auslaßöffnungen 51,52 nach dem Durchstoßen des Schließelements 38 in dem Diffusorkopf 13 bzw. außerhalb der Speicherkammer 11 angeordnet sind (Fig. 4).

Entsprechend der in den Fign. 1 und 2 dargestellten Ausführungsform weist das Rohr 34 einen Anschlag 45 sowie versetzt angeordnete Einlaßöffnungen 41,42 auf. Somit strömt das Gas aus der Speicherkammer 11 nach dem Zerstören des Schließelements 38 entsprechend der in Fig. 4 dargestellten Pfeile durch die Einlaßöffnungen 41,42 in das Rohrinnere und durch die Auslaßöffnungen 51,52 in den Diffusorkopf 13. Der Diffusorkopf 13 ist entsprechend der anhand Fign. 1 und 2 beschriebenen Ausführungsform ausgebildet.

In der in den Fign. 5 und 6 dargestellten Ausführungsform ist die Stirnseite des Rohrs 34 ebenfalls mit einem Verschluß 55 verschlossen. Der Verschluß 55 ist in das Innere des Rohrs 34 gewölbt ausgebildet. Am Umfang des Rohrs 34 sind Auslaßöffnungen 56,57 vorgesehen, deren Abstand zur Stirnseite 43 des Rohrs 34 größer ist als der Abstand der Auslaßöffnungen 51,52 in der in den Fign. 3 und 4 dargestellten Ausführungsform. Das Rohr 34 weist wiederum entsprechende Einlaßöffnungen 41,42 auf.

Beim Auslösen des Gasgenerators wird das Rohr 34, wie anhand der Fign. 1 und 2 beschrieben, in Richtung eines Diffusorkopfes 13a bewegt. Hierbei wird von der Stirnseite 43 des Rohrs 34 das Schließelement 38 zerstört. Der Diffusorkopf 13a weist in dieser Ausführungsform eine zylindrische Vertiefung 58 auf. Der Durchmesser der Vertiefung 58 ist geringfügig größer als der Außendurchmesser des Rohrs 34, so daß beim Eintauchen des Rohrs 34 in die Vertiefung 58 zwischen dem Rohr 34 und der Vertiefung 58 ein Spalt 59 gebildet ist. Beim Eintauchen des Rohrs 34 in die Vertiefung 58 muß die in der Vertiefung 58 vorhandene Luft durch den Spalt 59 entweichen. Hierdurch wird die Bewegung des Rohrs 34 gedämpft.

Sobald die Auslaßöffnungen 56,57 den Deckel 40 zumindest teilweise passiert haben, strömt in Richtung der in Fig. 6 dargestellten Pfeile Gas aus der Speicherkammer 11 durch die Einlaßöffnungen 41,42 in das Rohr 34 und durch die Auslaßöffnungen 56,57 in den Diffusorkopf 13a. Während der gedämpften Bewegung des Rohrs 34 sind die Auslaßöffnungen 56,57 teilweise von dem Deckel 40 verschlossen, so daß der Massefluß in den Airbag begrenzt ist.

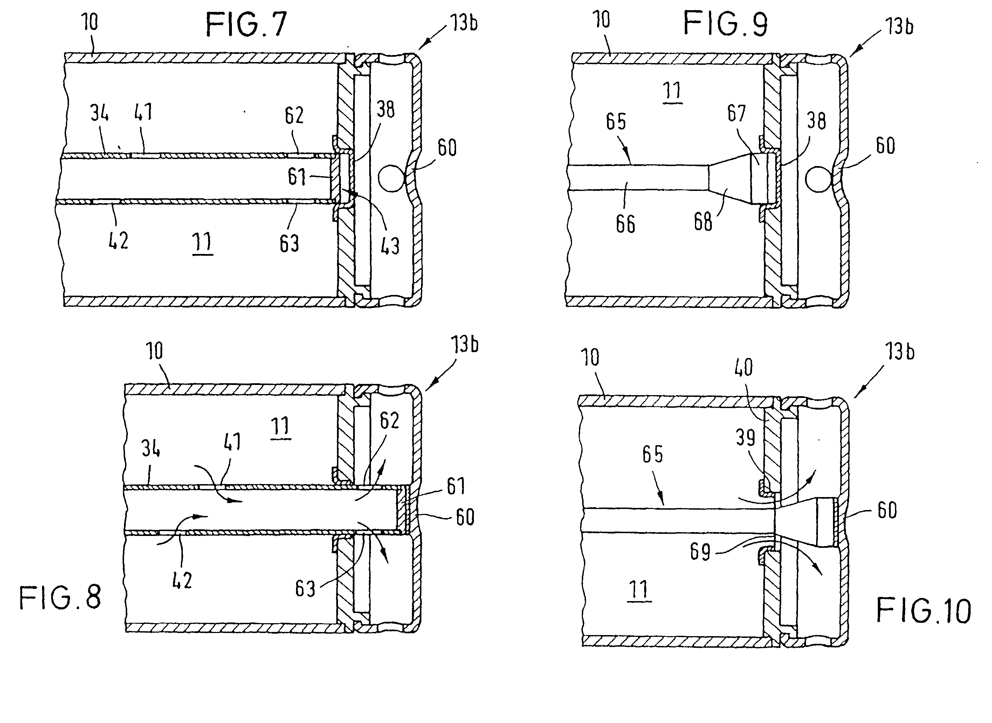

In der in den Fign. 7 und 8 dargestellten Ausführungsform ist als Dämpfung des Rohrs 34 in einem Diffusorkopf 13b eine plastisch oder elastisch verformbare Einbuchtung 60 gegenüber dem Schließelement 38 angeordnet. Die Stirnseite 43 des Rohrs 34 ist mit einem Verschluß 61 versehen, der ebenfalls plastisch oder elastisch verformbar sein kann. Ferner weist das Rohr 34 nahe der Stirnseite 43 angeordnete Auslaßöffnungen 62,63 sowie Einlaßöffnungen 41,42 auf. Nach dem Zerstören des Schließelements 38 strömt aus der Speicherkammer 11 Gas in Richtung der Pfeile durch das Rohr 34 in den Diffusorkopf 13.

Die in den Fign. 9 und 10 dargestellte erfindungsgemäße Ausführungsform weist anstelle des Rohrs 34 einen Kolben 65 auf. Der Kolben 65 besteht aus einer Kolbenstange 66 und einem Kolbenfuß 67, dessen Durchmesser größer als der Durchmesser der Kolbenstange 66 ist. Der Kolben 65 weist zwischen dem Kolbenfuß 67 und der Kolbenstange 66 einen zylinderstumpfförmigen Übergangsbereich 68 auf. Ferner ist der Kolben 65 an dem dem Kolbenfuß 67 gegenüberliegenden Ende mit einem nicht dargestellten Kolbenkopf verbunden, der dem Kopfteil 33 (Fig. 1) des Rohrs 34 entspricht. Beim Auslösen des Gasgenerators wird der Kolben 65 in Fig. 9 nach rechts bewegt. Hierbei zerstört der Kolbenfuß 67 das Schließelement 38 und trifft auf die als Dämpfung dienende Einbuchtung 60 des Diffusorkopfs 13b. Sowohl die Einbuchtung 60 als auch der Kolbenfuß 67 können elastisch oder plastisch verformbar sein.

Anstelle der Einbuchtung 60 kann auch die anhand der Fign. 5 und 6 beschriebene Vertiefung 58 in dem Diffusorkopf 13b zur Dämpfung des Kolbens 65 vorgesehen sein.

Sobald das Schließelement 38 zerstört ist, strömt aus der Speicherkammer 11 Gas in Richtung der in Fig. 10 dargestellten Pfeile in den Diffursorkopf 13b. Aufgrund des kegelstumpfförmigen Teils 68 des Kolbens 65 ist der Massenstrom durch einen zwischen dem kegelstumpfförmigen Teil 68 und der Öffnung 39 des Deckels 40 gebildeter Spalt 69 zu Beginn der Bewegung gering. Mit zunehmender Bewegung des Kolbens 65 in Fig. 10 nach rechts vergrößert sich der Spalt 69 und der Massefluß aus der Speicherkammer 11 nimmt entsprechend zu.

Zur weiteren Steuerung des zeitlichen Druckverlaufs können auch die in den einzelnen Ausführungsformen beschriebenen Einzelheiten sinnvoll miteinander kombiniert werden. So kann beispielsweise das Rohr 34 eine der Form des Kolbens 65 entsprechende Außenkontur aufweisen.

## Patentansprüche

1. Gasgenerator mit einer Zündladung (16), mindestens einem Anzündelement (21,22) zum Anzünden der Zündladung (16), einer ein Druckgas enthaltenden Speicherkammer (11), die mit einem Schließelement (38) verschlossen ist, und einem das Schließelement (38) unter Druck zerstörenden Stoßelement, wobei als Stoßelement ein Kolben (65) vorgesehen ist, der mit der von dem Schließelement (38) verschlossenen Öffnung (39) nach dem Zerstören des Schließelements (38) einen Austrittsspalt (69) bildet, dessen Querschnittsfläche sich in Abhängigkeit der Stellung des Kolbens (65) verändert, **dadurch gekennzeichnet, dass** zum Dämpfen der Bewegung des Kolbens (65) ein Dämpfungselement (60) vorgesehen ist und die Stirnseite des Kolbens (65) gegen das verformbare Dämpfungselement (60) stößt.

2. Gasgenerator nach Anspruch 1, **dadurch gekennzeichnet, dass** die Zündladung (16) mindestens einen zusätzlichen zeitversetzt zündbaren Zündsatz (18) aufweist.

## Claims

1. Gas generator having an ignition charge (16), at least one ignition element (21, 22) for igniting the ignition charge (16), a storage chamber (11) containing a pressurized gas, the storage chamber (11) being closed by a closure element (38), and an impact element which destroys the closure element (38) under pressure, with a piston (65) being provided as the impact element, which piston together with the opening (39), which is closed by the closure element (38), after the destruction of the closure element (38) forms an exit gap (69) the cross-sectional area of which changes as a function of the position of the piston (65), **characterised in that** a damping element (60) is provided in order to dampen the movement of the piston (65) and the end face of the piston (65) pushes against the deformable damping element (60).

2. Gas generator according to claim 1, **characterised in that** the ignition charge (16) has at least one additional ignition composition (18) that is ignitable in a time-staggered manner.

## Revendications

1. Générateur de gaz avec une charge d'amorçage (16), avec au moins un élément d'allumage (21, 22) pour l'allumage de la charge d'amorçage, avec une chambre d'accumulation (11) qui contient un gaz sous pression et est fermée par un élément d'obturation (38), et avec un élément de percussion qui sous l'action d'une pression détruit l'élément d'obturation (38), un piston (65) étant prévu comme élément de percussion, lequel piston après destruction de l'élément d'obturation (38) définit avec l'ouverture (39) une fente de sortie (69), dont la surface en section transversale varie en fonction de la position du piston (65), **caractérisé par le fait qu'**il est prévu un élément amortisseur (60) pour amortir la course du piston (65) et que la face frontale du piston (65) bute contre l'élément amortisseur (60) déformable.

2. Générateur de gaz selon la revendication 1, **caractérisé par le fait que** la charge d'amorçage (16) comprend au moins un élément d'amorçage (18) supplémentaire, dont l'allumage est décalé dans le temps.
